# EUROPÄISCHE PATENTANMELDUNG

(11) **EP 0 700 872 A1**
(43) Veröffentlichungstag der Anmeldung: **13.03.1996**
(21) Anmeldenummer: 95112264.7
(22) Anmeldetag: 04.08.1995
(51) Int. Cl.: C02F 1/46, C25C 7/08, C02F 1/62

(54) **Verfahren und Vorrichtung zum Entfernen der Schwermetallabscheidungen auf einer Kathode**

(30) Priorität: 13.08.1994 DE 4428787
(71) Anmelder: FRAUNHOFER-GESELLSCHAFT ZUR FÖRDERUNG DER ANGEWANDTEN FORSCHUNG E.V., D-80636 München (DE)
(72) Erfinder: Hambitzer, Günther, Dr., D-76327 Pfinztal (DE); Böke, Winfried, D-76229 Karlsruhe (DE); Oertel, Armin, D-76327 Pfinztal (DE)
(74) Vertreter: Dipl.-Ing. Heiner Lichti Dipl.-Phys. Dr.rer.nat. Jost Lempert Dipl.-Ing. Hartmut Lasch

(57) **Zusammenfassung**

Zum Reinigen von Schwermetalle enthaltendem Abwasser schlägt die Erfindung ein Verfahren vor, nach dem Schwermetallabscheidungen auf einer Kathode bzw. auf Kathoden mechanisch entfernt werden. Hierzu sieht eine erfindungsgemäße Vorrichtung eine Einrichtung zum mechanischen Entfernen der Schwermetallabscheidungen auf der Kathode bzw. den Kathoden vor.

## Beschreibung

Die Erfindung betrifft ein Verfahren und eine Vorrichtung zum Reinigen von Abwasser, das Schwermetalle enthält, die kathodisch abgeschieden werden, mit mindestens einer Kathode und einer Anode.

Die Erfindung bezieht sich auch auf das Reinigen von feststoffhaltigen Abwässern, wie Schlämmen, Gewässersedimenten oder Baggerschlick.

Bisher werden hierzu physikalisch-chemische Verfahren, wie Fällung, Filtration, Extraktion und Oxidation angewandt. Die bekannten Verfahren können die strenger werdenden Anforderungen an die Reinigung solcher Abwässer, insbesondere aufgrund niedrigerer gesetzlicher Grenzwerte für Schadstoffe in Abwässern und abgelagerten Ausfällprodukten, nur teilweise und nur unter hohen Kosten erfüllen. Die Ausfällungen bzw. das Filtrat müssen als Sondermüll deponiert werden. Eine Weiterverarbeitung oder Wiederverwertung ist nicht möglich. Ein weiterer Nachteil der bekannten Abwasserreinigungsverfahren besteht in der meist notwendigen Zugabe von Chemikalien zum Ausfällen der Schwermetallverunreinigungen, wodurch Abfallvolumen und Salzfracht erhöht werden.

Es ist bekannt, elektro-chemische Verfahren zur Wiedergewinnung von Edelmetallen und z.B. Kupfer bei Produktionsprozessen, bei denen entsprechende Lösungen anfallen, einzusetzen. Die bekannten Verfahren sind aber zur Reinigung von Abwässern, die im allgemeinen mehrere Schwermetalle enthalten und komplex zusammengesetzt sind, insbesondere feststoffhaltigen Abwässern, im großindustriellen Maßstab nicht geeignet, da sie im allgemeinen nur für kleinere Mengen ausgelegt sind und mit ihnen nur diskontinuierlich gearbeitet werden kann.

Der Erfindung liegt die Aufgabe zugrunde, ein Verfahren und eine Vorrichtung zu schaffen, die unter Vermeidung der oben genannten Nachteile zum Reinigen von Schwermetalle enthaltenden Abwässern im großtechnischen Maßstab geeignet sind.

Erfindungsgemäß wird die genannte Aufgabe bei einem Verfahren der eingangs genannten Art dadurch gelöst, daß Schwermetallabscheidungen auf der Kathode mechanisch entfernt werden. Eine Vorrichtung zur Lösung der genannten Aufgabe ist gekennzeichnet durch eine Einrichtung zum mechanischen Entfernen von Schwermetallabscheidungen von der Kathode. Die aktive Oberfläche der Kathode wird also erfindungsgemäß sie erneuernd bearbeitet, und zwar vorzugsweise spanabhebend, worunter auch schabend und schleifend verstanden wird. Solche gleichbleibend aktiven Kathodenoberflächen sind speziell für undefinierte und sich ständig ändernde Abwasserzusammensetzungen geeignet.

Verfahren und Vorrichtung erlauben, nahezu alle Parameter, die die Raum-Zeit-Ausbeute beeinflussen, wie Elektrodenfläche und -abstand, Elektrolytvolumen und -durchflußgeschwindigkeit, Strombedeckung und die Verwendung unterschiedlicher Elektrodenmaterialien bei jeweils unterschiedlichen elektrochemischen Kenndaten in einem Reaktor zu variieren bzw. zu realisieren. Damit lassen sich alle vorrichtungs- und verfahrensmäßigen Merkmale im Hinblick auf maximale Raum-Zeit-Ausbeute optimieren.

Erfindungsgemäß werden Schwermetalle aus kontinuierlich fließendem Abwasser eben kontinuierlich an den Elektroden abgeschieden und von diesen ebenfalls kontinuierlich mechanisch entfernt, so daß die Schwermetalle in reiner, wiederverwendbarer Form anfallen.

Gemäß bevorzugter Ausführungsformen des erfindungsgemäßen Verfahrens ist dabei vorgesehen, daß Kathode und ein Werkzeug zum Entfernen der Abscheidungen kontinuierlich relativ zueinander bewegt werden, wobei insbesondere scheibenförmige Kathoden und das Werkzeug zum Entfernen der Abscheidungen aneinander entlang bewegt werden. Eine Weiterbildung des erfindungsgemäßen Verfahrens sieht insbesondere vor, daß die Schwermetallabscheidungen von den Kathoden abgeschabt werden, wenn auch ein Abschleifen oder ein spanabhebendes Abtragen der Schwermetallabscheidungen ebenfalls möglich ist.

Gemäß einer bevorzugten Ausgestaltung des erfindungsgemäßen Verfahrens ist vorgesehen, daß die Anode dynamisch durch Bleidioxidabscheidungen aus dem Abwasser auf einem Anodengrundmaterial gebildet wird, wobei insbesondere dem Abwasser bei nicht ausreichendem Bleigehalt Blei zugesetzt wird. Die Anode ist dabei eine solche mit hoher Sauerstoff-Überspannung. Hierdurch wird erreicht, daß organische Substanzen, wie eben auch organische Metallkomplexe, an der Anode oxidativ zunächst zu umweltverträglichen Produkten zersetzt werden, wobei die Metalle gegebenenfalls in gelöster Form anfallen. Die Metalle werden dann in der erwähnten Weise an der Kathode kathodisch abgeschieden. Die an der Anode und Kathode entstehenden Gase können aufgefangen und verbrannt werden, wobei die erzeugte Wärme zur Vorerwärmung des zu reinigenden Abwassers eingesetzt werden kann.

Die Anode ist, wie gesagt, eine dynamische oder selbsterneuernde Bleidioxidanode, wobei gegebenenfalls das Grundmaterial der Anode Titan ist. Zur Verbesserung der dynamischen Bleidioxidbildung auf der Anode bzw. Initiierung der Bildung kann diese vorab mit Platin oder Palladium behandelt sein, d.h. mit diesen Materialien vorbeschichtet sein. Als Anodenmaterialien können weiterhin auch verwendet werden Sn/Pb, Graphit, Kohle sowie Verbundwerkstoffe, bei welchen die elektrochemisch aktiven Metalle, Legierungen, Metalloxide etc. in eine Kunststoffmatrix eingebaut sind. Diese Anodenmaterialien sind so einer mechanischen Oberflächenbearbeitung zugänglich. Auf diese Weise kann auf der Anode ebenfalls für eine gleichbleibend elektrochemisch aktive Oberfläche gesorgt werden. In bevorzugter Ausgestaltung kann vorgesehen sein, daß die Bleidioxidschicht auf der Anode mechanisch auf einer vorbestimmten Stärke gehalten wird. Auch dies geschieht vorzugsweise spanabhebend, insbesondere schabend oder schleifend, um im Fall von Bleidioxid die Schichtdicke auf ein Höchstmaß zu begrenzen. Dies ist insbesondere vorteilhaft bei Abwässern mit hohen Bleigehalten.

Während grundsätzlich zwischen Kathode und Anode ein Gleichstrom fließt, kann in bevorzugter Weiterbildung vorgesehen sein, daß zwischen Kathoden und Anoden gepulster Gleichstrom fließt oder aber daß der Stromfluß zwischen Kathoden und Anoden kurzzeitig unterbrochen wird. Hierdurch werden zunächst Polarisationseffekte an den Elektroden verhindert. Weiterhin wird eine kurzzeitige Unterschreitung des Abscheidungspotentials für Bleidioxid erreicht, so daß demgemäß die Schichtdicke der Bleidioxidschicht auf der Anode derart eingeregelt werden kann, daß ein mechanisches Abtragen bei zu dicker Schicht entfällt, wenn allerdings auch ein solches Vorgehen vorgesehen sein kann. Hierdurch kann Einfluß auf die Schichtdicke der auf der Anode aufwachsenden Bleidioxidschicht genommen werden, insbesondere um genügend Abstand zwischen Kathode und Anode zu halten.

In weiterer bevorzugter Ausgestaltung kann vorgesehen sein, daß entstehende gasförmige Reaktionsprodukte verbrannt werden und daß das Abwasser vorgewärmt wird, wobei insbesondere das Abwasser durch beim Verbrennen der gasförmigen Reaktionsprodukte erzeugte Wärme vorgewärmt wird.

Die erfindungsgemäße Vorrichtung sieht in Weiterbildung vor, daß die Kathoden als drehbare Scheiben ausgebildet sind, die teilweise in das Abwasser eintauchen und relativ zur Schneideinrichtung drehbar sind, wobei insbesondere bei mindestens zwei Kathoden eine und die Schneideinrichtung gegen die andere Kathode unter elastischem Andruck bewegbar sind. Der Drehantrieb erfolgt durch einen Motor. Die Kathoden sind insbesondere solche, die eine hohe Überspannung gegen Wasserstoff aufweisen. Die Kathode besteht dabei in der Regel aus Eisen, sie kann aber auch aus Stahl, vorzugsweise Edelstahl, oder aber aus geeigneten Kohlenstoffmaterialien, wie Graphit oder Glaskohle, bestehen. Die Materialien sind dabei in der Regel auf einer geeigneten Trägerschicht vorgesehen.

Zum Entfernen der Metallabscheidungen auf der Kathode sind an der Schneideinrichtung Schneiden vorgesehen, mit denen die Abscheidungen je nach Stärke des Andrucks abgeschliffen, abgeschabt oder spanabhebend abgehoben werden. Zum Austrag der von den Kathoden entfernten Metallabscheidungen ist eine Rinne vorgesehen, über die die Metallabscheidungen fortgeführt werden, beispielsweise durch periodisches Spülen.

Alternativ zur Ausgestaltung der erfindungsgemäßen Vorrichtung mit scheibenförmigen, sich drehenden Kathoden kann die Kathode auch als ein über Rollen geführtes, in das Abwasser eintauchendes Band ausgebildet sein.

Die erfindungsgemäße Vorrichtung erbringt eine hohe optimierte Raum-Zeit-Ausbeute. Dies ist insbesondere bei einer großtechnisch betriebenen Abwasserbehandlungsanlage unabdingbare Voraussetzung für die technische Realisierung einer solchen Anlage.

Mit der erfindungsgemäßen Vorrichtung ist es möglich, durch den steuerbaren Andruck der zweiten kreisförmigen Kathodenplatte auf die Schleifeinrichtung und von dort wieder auf die erste Kathodenplatte die Oberflächen der Kathoden je nach Bedarf nur abzuschaben oder aber auch spanabhebend, also die Oberfläche des Kathodengrundmaterials erneuernd, zu bearbeiten. Diese Eigenschaft ist insbesondere bei der elektrolytischen Behandlung von undefinierten Abwässern mit zum Teil hohen Feststoffgehalten von unschätzbarem Vorteil. Es ermöglicht so, immer eine gleichbleibend elektrochemisch aktive Kathodenoberfläche bereitzustellen.

Weitere Vorteile und Merkmale der Erfindung ergeben sich aus den Ansprüchen und aus der nachfolgenden Beschreibung, in der ein Ausführungsbeispiel der Erfindung unter Bezugnahme auf die Zeichnung im einzelnen erläutert ist. Dabei zeigt:

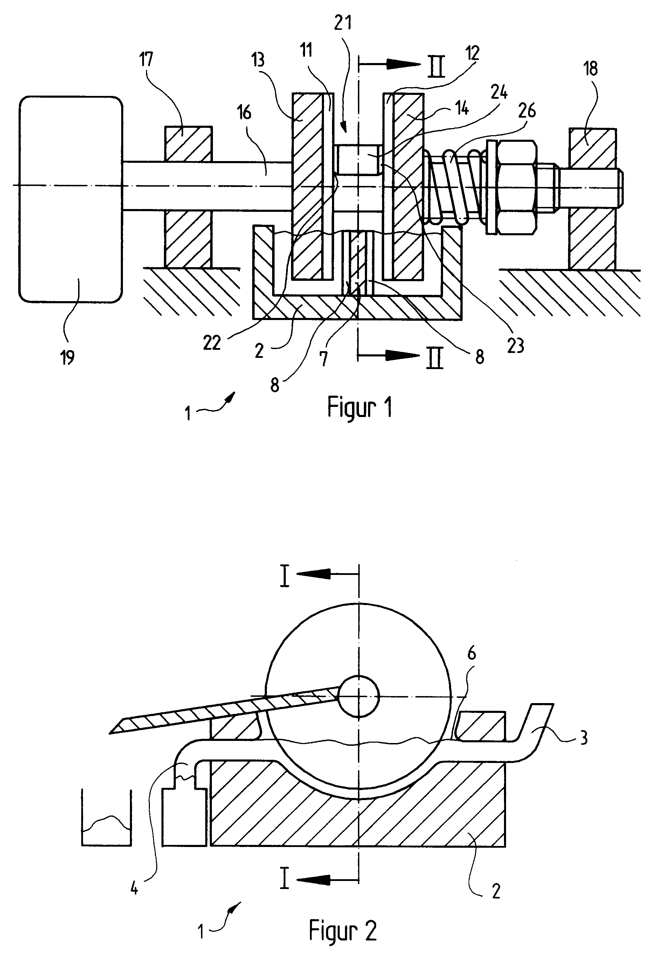

- Fig. 1: einen vertikalen Längsschnitt durch die bevorzugte Ausgestaltung der erfindungsgemäßen Vorrichtung entsprechend I-I der Fig. 2; und
- Fig. 2: einen vertikalen Schnitt entsprechend II-II der Fig. 1.

Die erfindungsgemäße Vorrichtung 1 weist ein Reaktionsgefäß in Form einer Wanne 2 auf. Zur Wanne 2 führt ein Abwasserzulauf 3 und ein Ablauf 4, wobei der Ablauf 4 vorzugsweise derart ausgebildet ist, daß sich in der Wanne 2 immer ein konstanter Flüssigkeitsspiegel 6 ergibt.

Mittig in der Wanne 2 ist ein Träger 7, wie aus PVC, angeordnet, der beidseits mit Anoden 8 versehen ist. Die Anoden 8 sind vollständig von dem zu behandelnden Abwasser überdeckt. Die Anoden 8 weisen einen Grundkörper aus Titan auf. Sie können weiterhin mit Platin oder Palladium vorbehandelt sein, d.h. vor Einsatz kann auf ihnen eine dünne Platin- oder Palladiumschicht aufgebracht sein. Die Anoden 8 bilden im Zuge der Reinigung der Abwässer dynamische, bleidioxidbeschichtete Titanelektroden, indem sich bei der Reinigung der schwermetallhaltigen Abwässer eine Bleidioxidschicht auf der Titan-Grundschicht bildet. Wenn die Abwässer keinen hinreichenden Bleianteil aufweisen, so kann Blei hierzu zudosiert werden. Mit der Zudosierung ist keine zusätzliche Abwasserbelastung verbunden, da das zudosierte Blei im Reinigungsprozeß wieder eliminiert wird.

In die Wanne 2 ragen weiterhin beidseits der Anoden 8 zwei Kathoden 11, 12, die als durch die Wanne 2 drehbare Scheiben ausgebildet sind und ebenfalls auf Trägern 13, 14 sitzen. Die Kathoden 11, 12 sind drehfest auf einer Welle 16 angeordnet, die in Lagern 17, 18 gelagert ist und durch einen Motor 19 angetrieben wird. Zwischen den Kathoden 11, 12 ist eine Schneideinrichtung 21 angeordnet, die in Richtung der Achse der Welle 16 verschieblich, aber relativ zur Wanne 2 drehfest angeordnet ist. Die Schneideinrichtung weist Schneiden 22, 23 auf, die an den Kathoden 11, 12 anliegen und zwischen denen eine Ableitrinne 24 ausgebildet ist. Die Kathode 12 mit ihrem Träger 14 ist zwar, wie gesagt, drehfest, aber axial verschiebbar auf der Welle 16 angeordnet. Sie wird elastisch durch eine Feder 26 gegen die Schneideinrichtung und über diese auf die Kathode 11 hin gedrückt.

Hierdurch liegen die Schneiden 22, 23 immer unter Druck an der ihnen zugewandten Stirnseite der Kathoden 11, 12 an, so daß sie bei Drehen der Kathoden 11, 12 die auf diesen abgebildeten Abscheidungen abtragen. Die Abscheidungen werden über die Rinne 24 fortgefördert, beispielsweise indem diese kontinuierlich oder periodisch gespült wird oder aber ein Schieber über diese geführt wird.

Die Kathoden 11, 12 und die Anoden 8 sind über eine gegebenenfalls gepulste Gleichstromquelle elektrisch miteinander verbunden (nicht dargestellt).

Zum Betrieb werden die Kathoden 11, 12 durch den motorischen Antrieb 19 in Drehungen versetzt. Die Kathoden 11, 12 drehen sich dabei mit geringer Geschwindigkeit. Durch den Zulauf 3 wird Abwasser der Wanne 2 zugeführt und über den Ablauf 4 entfernt. Zwischen Anoden 8 und Kathoden 11, 12 wird gegebenenfalls gepulster Gleichstrom angelegt. Es bildet sich, wie erläutert, eine Bleidioxidschicht auf den Anoden 8. An den Anoden 8 werden organische Verbindungen, insbesondere auch organische Metallverbindungen, oxidiert, wobei insbesondere gasförmige Produkte gebildet werden können, die gegebenenfalls aufgefangen und verbrannt werden, wobei die entstehende Wärme gegebenenfalls zur Vorerwärmung des über den Zulauf 3 zugeführten Abwassers verwendet werden kann, wodurch die Wirksamkeit des erfindungsgemäßen Reinigungsprozesses verbessert wird.

Schwermetall wird kathodisch an den Kathoden 11, 12 abgeschieden und lagert sich an diesen ab. Durch die Drehung der Kathoden 11, 12 werden die Metallablagerungen durch die Schneideinrichtung 21 an den Schneiden 22, 23 abgehoben, beispielsweise abgeschabt oder abgeschliffen, und rutschen in die Rinne 24, aus der sie in der beschriebenen Weise entfernt werden.

## Patentansprüche

1. Verfahren zum Reinigen von Abwasser, das Schwermetalle enthält, die kathodisch abgeschieden werden, mit mindestens einer Kathode und einer Anode, dadurch gekennzeichnet, daß Schwermetallabscheidungen auf der Kathode mechanisch entfernt werden.

2. Verfahren nach Anspruch 1, dadurch gekennzeichnet, daß Kathode und ein Werkzeug zum Entfernen der Abscheidungen kontinuierlich relativ zueinander bewegt werden.

3. Verfahren nach Anspruch 2, dadurch gekennzeichnet, daß scheibenförmige Kathoden und das Werkzeug zum Entfernen der Abscheidungen aneinander entlang bewegt werden.

4. Verfahren nach einem der vorangehenden Ansprüche, dadurch gekennzeichnet, daß die Schwermetallabscheidungen von den Kathoden abgeschabt werden.

5. Verfahren nach einem der vorangehenden Ansprüche, dadurch gekennzeichnet, daß die Anode dynamisch durch Bleidioxidabscheidungen aus dem Abwasser auf einem Anodengrundmaterial gebildet wird.

6. Verfahren nach Anspruch 5, dadurch gekennzeichnet, daß dem Abwasser bei nicht ausreichendem Bleigehalt Blei zugesetzt wird.

7. Verfahren nach Anspruch 5 oder 6, dadurch gekennzeichnet, daß die Bleidioxidschicht auf der Anode mechanisch auf einer vorbestimmten Stärke gehalten wird.

8. Verfahren nach einem der vorangehenden Ansprüche, dadurch gekennzeichnet, daß entstehende gasförmige Reaktionsprodukte verbrannt werden.

9. Vorrichtung zum Reinigen von Abwasser, das Schwermetalle enthält, die kathodisch abgeschieden werden, mit mindestens einer Kathode und einer Anode, gekennzeichnet durch eine Einrichtung (21) zum mechanischen Entfernen von Schwermetallabscheidungen von der Kathode.

10. Vorrichtung nach Anspruch 9, gekennzeichnet durch eine Relativbewegung von Kathoden (11, 12) und der Einrichtung (21) zum mechanischen Entfernen der Schwermetallabscheidungen.

11. Vorrichtung nach Anspruch 9 oder 10, dadurch gekennzeichnet, daß die Kathoden (11, 12) als drehbare Scheiben ausgebildet sind, die teilweise in das Abwasser eintauchen und relativ zur Schneideinrichtung (21) drehbar sind.

12. Vorrichtung nach Anspruch 11, dadurch gekennzeichnet, daß bei mindestens zwei Kathoden (11, 12) eine (12) und die Schneideinrichtung (21) gegen die andere Kathode (11) unter elastischem Andruck bewegbar sind.

13. Vorrichtung nach einem der Ansprüche 9 bis 12, gekennzeichnet durch einen motorischen Drehantrieb (19) für die Kathoden (11, 12).

14. Vorrichtung nach einem der Ansprüche 9 bis 13, dadurch gekennzeichnet, daß die Kathoden (11, 12) solche mit hoher Wasserstoff-Überspannung sind.

15. Vorrichtung nach einem der Ansprüche 9 bis 14, dadurch gekennzeichnet, daß die Anoden solche mit hoher Sauerstoff-Überspannung sind.

16. Vorrichtung nach einem der Ansprüche 9 bis 15, dadurch gekennzeichnet, daß die Anoden an Anodengrundmaterial Titan aufweisen.

17. Vorrichtung nach einem der Ansprüche 9 bis 16, dadurch gekennzeichnet, daß die Anoden solche mit einer Bleidioxidschicht sind.

18. Vorrichtung nach einem der Ansprüche 9 bis 17, dadurch gekennzeichnet, daß die Anoden dynamisch beschichtete Bleidioxidanoden sind.

19. Vorrichtung nach Anspruch 18, dadurch gekennzeichnet, daß die Anoden mit Platin oder Palladium vorbehandelt sind.

20. Vorrichtung nach einem der Ansprüche 9 bis 19, dadurch gekennzeichnet, daß die Schneideinrichtung (21) an den Kathoden (11, 12) anliegende Schneiden (22, 23) zum mechanischen Entfernen der Metallabscheidungen aufweist.

21. Vorrichtung nach einem der Ansprüche 9 bis 20, gekennzeichnet durch eine Rinne (24) zum Fortführen der von den Kathoden (11, 12) abgenommenen Schwermetallabscheidungen.
